Europäisches Patentamt

European Patent Office

Office européen des brevets

(11) Numéro de publication : **0 003 197**
**B1**

## FASCICULE DE BREVET EUROPÉEN

(45) Date de publication du fascicule du brevet :
**11.11.81**

(51) Int. Cl.³ : **B 24 B 27/04**

(21) Numéro de dépôt : **79400016.6**

(22) Date de dépôt : **08.01.79**

(54) **Machine pour le meulage de produits de dureté élevée.**

(30) Priorité : **09.01.78 FR 7800404**

(43) Date de publication de la demande :
**25.07.79 (Bulletin 79/15)**

(45) Mention de la délivrance du brevet :
**11.11.81 Bulletin 81/45**

(84) Etats contractants désignés :
**BE CH DE FR GB IT LU NL SE**

(56) Documents cités :
**FR - A - 1 400 615**
**FR - A - 1 570 805**
**GB - A - 792 088**
**US - A - 3 603 038**

(73) Titulaire : **SOCIETE EUROPEENNE DES PRODUITS REFRACTAIRES**
**67, Boulevard du Château**
**F-92200 Neuilly-sur-Seine (FR)**

(72) Inventeur : **Parigot, Georges**
**Quartier Le Village**
**F-84520 Althen des Paluds (FR)**
Inventeur : **Passerat, Jean-Louis**
**637, Chemin de la Croix de Joannis**
**F-84140 Montfavet (FR)**

(74) Mandataire : **de Boisse, Louis**
**37, Avenue Franklin D. Roosevelt**
**F-75008 Paris (FR)**

Imprimerie Jouve, 17, rue du Louvre, 75001 Paris, France

## Machine pour le meulage de produits de dureté élevée

L'invention concerne une machine pour le meulage de produits de dureté élevée, tels que les produits réfractaires, fondus, coulés ou moulés ou agglomérés à base d'oxydes ou à base de carbures, nitrures, borures ou de leurs mélanges, ou des aciers et alliages métalliques, ladite machine comprenant un bras portant à l'une de ses extrémités l'arbre porte-meule et la meule, un socle supportant la table sur laquelle est maintenue la pièce à usiner.

Le meulage de pièces importantes, présentant une dureté élevée, tels que par exemple les produits réfractaires à base d'oxydes de zirconium et d'alumine, et dont le poids peut atteindre 600 kg et plus, a jusqu'à présent été effectué avec des meuleuses du type pendulaire à meule au carbure de silicium. Ces meuleuses comportent un bâti formé de deux colonnes massives supportant à leur sommet des poutrelles sur lesquelles est accroché par une articulation le bras de meulage. Ce bras porte à une extrémité la meule et les poignées de direction et à l'autre extrémité le moteur d'entraînement de la broche. Un vérin permet de régler la hauteur de la meule par rapport à la surface à meuler.

Le meulage est une opération faite à partir de meules, constituées de grains d'abrasifs vitrifiés ou à liants résinoïdes, qui s'usent par fracturation et se renouvellent. La géométrie de la meule est donc très imparfaite et occasionne, lors de la coupe, d'importantes vibrations de fréquence variables. Par suite, le fonctionnement d'une telle meuleuse est une course de bruits et de vibrations qui, avec les efforts de conduite de la machine et l'ambiance humide, rendent les conditions de travail difficiles.

En effet, les vibrations engendrées par la coupe de la meule se propagent d'une part sur la pièce à usiner et sa table de fixation, et d'autre part sur la broche de la machine et ses supports. Généralement, ces deux parties sont reliées au bâti pour que l'ensemble soit rigide et permette une bonne précision, mais du fait de cette liaison on retrouve dans le bâti la conjugaison des vibrations provenant des ensembles pièce/table et broche/supports. Le déplacement latéral de la meule produit également des vibrations d'amplitudes variables.

L'utilisation de meules diamant résout une partie de ces problèmes, mais accroît sérieusement les frais d'investissement sans pour autant accroître la productivité.

Le problème consiste donc, avec des meuleuses à meule carbure, à supprimer les efforts de conduite de la machine et les vibrations transmises à l'opérateur, en utilisant des dispositifs hydrauliques pour la commande des mouvements du bras. C'est ainsi que le brevet français 1 570 805 décrit une meuleuse comportant un bras oscillant dans un plan vertical. Une extrémité du bras est montée pivotante sur un axe fixé au bâti, l'autre extrémité porte la meule. Un vérin à double effet, monté à l'arrière de l'axe autour duquel oscille le bras, permet le déplacement de la meule vers le haut ou le bas. Un étranglement est prévu sur le conduit amenant le fluide sous pression dans la chambre de piston qui commande l'abaissement du bras afin d'éviter un abaissement trop brutal de celui-ci. Le bras est maintenu en position par isolement des vannes et clapets de la source de pression. La descente de la meule se fait par tout ou rien par une opération simple de commande de vanne.

Le brevet français 1 400 615 décrit une meuleuse semblable à la précédente dans laquelle la commande des vannes est effectuée par l'intermédiaire de cames qui permettent, par leur profil, une ouverture progressive. Les cames sont commandées par des pédales et leviers. Un levier à main permet à l'opérateur de déterminer par sa position la valeur de la pression exercée sur la pièce à usiner. Si les meuleuses précédemment décrites ont apporté une amélioration des conditions de travail, elles ne permettent pas à l'opérateur d'avoir la sensation de l'effort qui s'exerce sur la pièce.

La meuleuse selon l'invention vise à résoudre ce problème en réduisant au maximum les vibrations mécaniques par amélioration de la suspension de la table portant la pièce et par l'adjonction d'un dispositif de retour d'effort qui permet à l'opérateur d'avoir la sensation de l'effort exercé par la meule sur la pièce à usiner.

Les explications et figures, données ci-après à titre d'exemple, permettront de comprendre comment l'invention peut être réalisée :

La figure 1 est une vue en perspective d'un exemple de réalisation d'une meuleuse selon l'invention ; la figure 2 est une vue en coupe d'un patin hydrostatique équipant la table ;

la figure 3 est un schéma du circuit de commande hydraulique des mouvements de montée et de descente du bras oscillant.

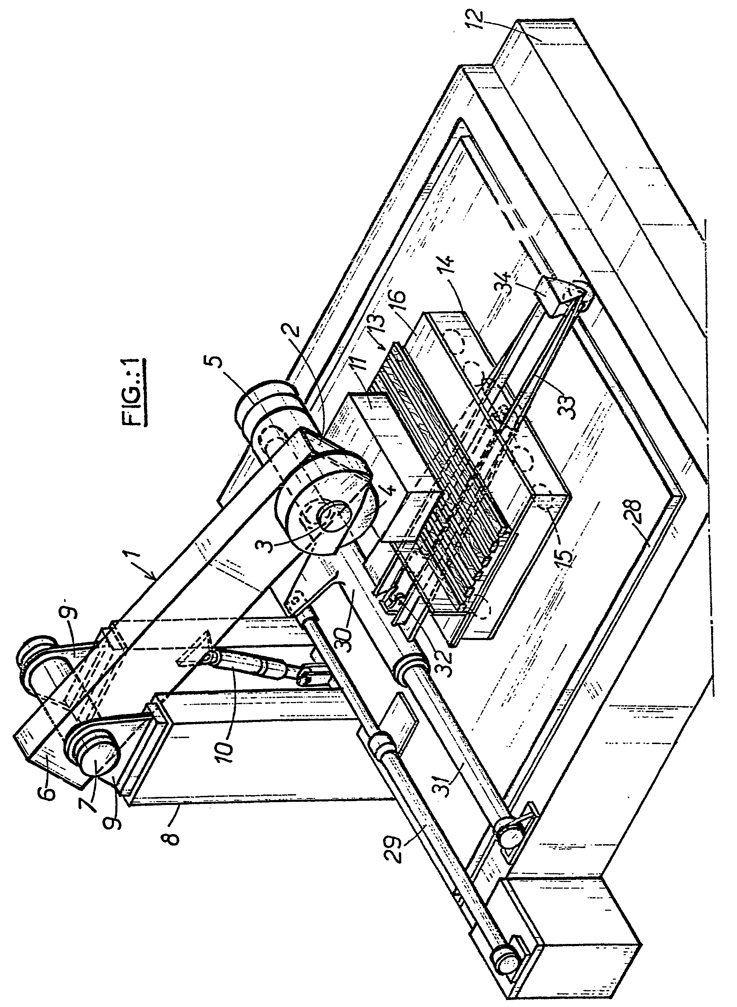

La figure 1 représente une vue en perspective d'une meuleuse selon l'invention. Cette machine comporte un bras 1 portant à une de ses extrémités 2 la broche 3 sur laquelle est fixée la meule 4. Cette broche est entraînée en rotation par un moteur 5 monté, selon cet exemple de réalisation, dans l'axe de la broche. Afin de pouvoir régler aisément la vitesse de la meule, on a utilisé de préférence un moteur hydraulique alimenté par une pompe à débit variable. La vitesse de rotation peut varier de 3 000 tours/minute à 0.

Le bras 1 est constitué par deux fers en U soudés sur une âme centrale qui forment ainsi un caisson nervuré de grande rigidité.

L'autre extrémité 6 du bras est maintenue par un axe 7 sur le support 8. Cette articulation, représentée schématiquement sur la figure 1, peut être conçue, par exemple, à partir de roulements à rotule sur deux rangées de rouleaux qui permettent d'obtenir un auto-alignement et une grande robustesse entre l'axe fixé sur le bras et les paliers 9 fixés rigidement sur le support 8. Cette articulation permet un mouvement d'oscillation dans un plan vertical parallèle au plan de la meule.

Le déplacement du bras est commandé et limité par des moyens de déplacement 10 disposés entre le support fixe 8 et le bras 1. Selon la forme de réalisation représentée, ces moyens sont constitués par un vérin hydraulique dont la nature et le fonctionnement seront ultérieurement décrits.

L'ensemble sur lequel repose la pièce à usiner 11 se compose d'un socle 12 et d'une table 13. La table est constituée par un caisson rigide comportant à sa partie inférieure 14 des patins hydrostatiques 15 uniformément répartis à sa surface. Selon l'exemple de réalisation représenté pour une table de 1 250 mm × 850 mm, on a utilisé 10 patins répartis en deux rangées de 5. La partie supérieure 16 du caisson constitue, à proprement parler, la table sur laquelle sont déposées les pièces à usiner. Cette table porte des moyens de serrage et de maintien des pièces, partiellement représentés et comprenant par exemple un vérin hydraulique de serrage.

Le soulèvement de la table soumise aux charges statiques et aux efforts d'usinage est assuré par les patins 15 qui sont du type circulaire à poche centrale.

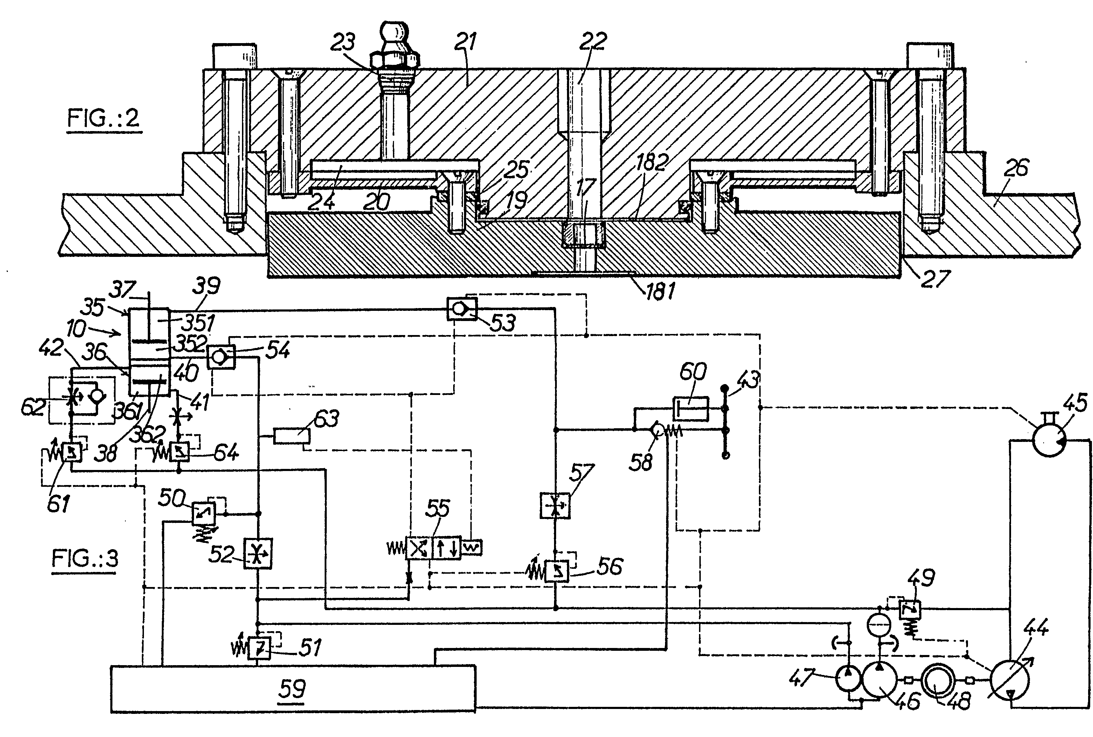

Le patin (figure 2) est alimenté au travers de restrictions 17 de type « orifice en mince paroi » produisant un écoulement turbulent. La chambre 181 pourrait être également alimentée par un tube capillaire. Le fluide utilisé pour le fonctionnement a été choisi identique à celui de coupe qui est dans cet exemple de l'eau. Etant donné la faible viscosité dynamique de l'eau, il est nécessaire de conserver pendant le fonctionnement une hauteur de soulèvement minimale. Cette disposition permet d'obtenir une bonne rigidité de la suspension et de ne pas dépasser le débit maximal fixé.

Il est nécessaire d'établir un compromis qui tienne compte de la planéité du socle et de son état de surface. La solution adoptée consiste à monter l'élément de patin 19 sur une membrane élastique et circulaire 20 lui permettant un débattement qui rattrape les défauts de planéité sur l'ensemble de la table par un déplacement parallèle à lui-même et par un léger déplacement angulaire. La périphérie de la membrane est fixée sur une pièce cylindrique 21 ou chapeau dans laquelle sont prévus :

— un canal 22 pour l'alimentation du patin en fluide de suspension et notamment des chambres 181 et 182,

— un canal 23 pour l'admission d'une substance visqueuse dans la chambre 24.

La substance visqueuse, par exemple de la graisse, évite entre autres le passage de l'eau en cas de rupture du joint 25. Ce joint 25 assure l'étanchéité entre le corps du chapeau et l'élément de patin et plus particulièrement de la chambre 182. Le fluide sous pression soumet les éléments 19 à une précharge par l'intermédiaire de la chambre 182, ce qui permet de les faire travailler dans des conditions optimales et de limiter le débit de fuite à des valeurs acceptables.

Le chapeau 21 et l'élément 19 sont logés dans une plaque de base 26 dont l'alésage inférieur 27 permet le libre jeu de l'élément 19 et notamment son déplacement angulaire.

L'intérêt principal de la table munie de patins hydrostatiques consiste en ce que les vibrations sont arrêtées par le film d'eau et que la table elle-même est amortie par cette eau. L'amplitude maximale des vibrations mesurées est environ 14 fois moindre que celle des vibrations produites dans une table classique. Les intérêts secondaires ne sont également pas négligeables car les patins éliminent toute partie mécanique, donc tout frottement entre la table et le socle, ce qui permet d'obtenir une souplesse de déplacement de la pièce sous la meule égale dans toutes les directions, quel que soit le poids de ladite pièce.

Le socle 12 est constitué d'un bloc de béton dont la planéité de la face supérieure a été soignée. La face supérieure porte des rigoles d'écoulement 28 pour la récupération du fluide de coupe et du fluide de suspension de la table. Le fluide est recyclé vers le dispositif d'alimentation en fluide de coupe et vers la pompe alimentant les patins.

Le déplacement de la table directement sur la face supérieure du socle en béton est rendu possible, malgré l'état de surface et les défauts de planéité inhérents à une semblable construction, grâce à la suspension hydrostatique de la table.

Sur le socle sont fixés les moyens de déplacement bidirectionnel de la table. Ces moyens sont constitués d'un vérin de déplacement transversal 29, le déplacement étant considéré par rapport au plan de rotation de la meule. L'extrémité fixe du vérin est fixée au socle, alors que son extrémité mobile coopère avec un manchon de guidage 30 coulissant sur un arbre 31 fixé sur le socle et parallèlement à la broche 3 de la meule. Le manchon de guidage porte, selon une direction sensiblement perpendiculaire, un vérin 32. L'extrémité mobile de ce vérin coopère avec le bord opposé de la table pour communiquer à l'ensemble un mouvement de déplacement latéral parallèle au plan de la meule. Du fait de la réalisation de la table sous forme de caisson, une partie du corps du vérin et sa partie mobile coulissent dans la table. Afin d'assurer un bon guidage de la table et de lui transmettre les mouvements de déplacement transversaux, on a prévu un bras de guidage 33 fixé à l'une de ses extrémités sur le manchon de guidage 30 et portant à son autre extrémité un galet de roulement 34.

Le socle 12 et le support 8 sont constitués de blocs de béton et sont solidaires pour donner à la machine une grande rigidité. Le film d'eau des patins hydrostatiques évite l'interaction des vibrations et la grande masse de l'ensemble amortit les vibrations en provenance de la broche. Le bloc de béton repose sur une suspension antivibratoire qui évite la transmission des vibrations aux postes voisins.

Le déplacement du bras dans le plan vertical est commandé à partir d'une centrale hydraulique (figure 3) agissant sur le vérin 10. Selon une forme de réalisation préférée de la machine, le déplacement du bras comporte également une sécurité empêchant un effort trop important sur la meule qui risquerait d'aboutir à son éclatement. Pour ce faire, le vérin 10 a une double fonction de déplacement du bras et de sécurité en cas d'efforts trop importants sur la meule et est constitué par un vérin double comportant deux corps 35 et 36 et deux pistons 37 et 38 dont les tiges sont articulées respectivement sur le bras 1 et sur le support 8 de la meuleuse. Chacun des corps est alimenté par deux conduites 39, 40 et 41, 42 reliées à deux valves 53 et 54 pilotées hydrauliquement et dont le fonctionnement sera précisé ultérieurement.

Les mouvements du bras dans le plan vertical sont commandés par l'opérateur par l'intermédiaire d'un levier de commande 43 agissant sur un dispositif hydraulique à retour d'effort, c'est-à-dire répercutant sur le levier les efforts subis par la meule lors de l'usinage de la pièce.

La centrale hydraulique représentée par les pompes et le réservoir de liquide hydraulique et les divers organes de mesure associés audit réservoir a pour fonction d'alimenter le moteur de la meuleuse, les vérins de déplacement de la table et de blocage des pièces, ainsi que le vérin de commande de déplacement du bras.

Afin de simplifier le schéma hydraulique, seule l'alimentation du moteur de la meuleuse et du vérin de déplacement du bras a été représentée.

La pompe à débit variable 44 alimente le moteur 45, assurant la rotation de la meule par l'intermédiaire d'un limiteur de pression non représenté. Un moteur électrique 48 permet le fonctionnement de la pompe à débit variable 44 et de la pompe à deux étages 46, 47.

La pompe a deux étages 46, 47, alimentant deux circuits hydrauliques :
— par son premier étage 46 et le premier circuit hydraulique, elle alimente le débit de fuite du moteur hydraulique 45 de la meule au travers du limiteur de pression 49 et le vérin 10, plus particulièrement la chambre 351, assurant le mouvement du bras. Le limiteur 49 laisse une priorité à l'alimentation du circuit allant au vérin ;
— par son deuxième étage 47 et le deuxième circuit hydraulique, elle alimente le vérin 10 et plus particulièrement la chambre 352.

Le premier circuit hydraulique forme, par l'intermédiaire de limiteurs et de régulateurs, deux autres circuits hydrauliques alimentant les chambres 361 et 362 du corps de vérin 36.

La fonction de déplacement du bras va être ci-après décrite.

Le bras de la meuleuse est suréquilibré en permanence par une pression constante qui s'exerce dans la chambre 352 formée sous le piston 37. Cette pression (de l'ordre de 20 bars par exemple) est fournie par le deuxième étage 47 de la pompe tarée par le limiteur de pression 50. La pression de tarage du limiteur 51 est supérieure (35 bars) à celle du limiteur 50 compte tenu des pertes de charge au niveau du régulateur 52.

Les valves 53 et 54 sont pilotées hydrauliquement par l'intermédiaire d'un distributeur 55 à commande électrique. La mise en route des pompes met le distributeur 55 sous tension (les liaisons électriques sont représentées en traits interrompus) et pilote les valves 53 et 54 qui deviennent passantes, ainsi que la valve 58 en communication avec le réservoir 59 : le bras monte en position haute maximale. La vitesse de montée du bras est réglée par le régulateur de débit 52 qui donne une marche en simple effet au niveau du vérin.

Si la pression dans le circuit hydraulique alimentant la valve 54 tombe au-dessous d'une valeur fixée (20 bars), un pressostat 63 excite le distributeur 55 qui annule le pilotage des valves 53 et 54. Les valves se ferment et bloquent le bras en position.

Pour la descente, le premier étage 46 de la pompe alimente la chambre 351 située au-dessus du piston 37 par l'intermédiaire du limiteur de pression 56, du régulateur de débit 57 et de la valve 53. Le dispositif sensible qui permet la commande du mouvement de la meule par le levier 43 est relié entre le régulateur de débit 57 et la valve 53. La pression du circuit maintient en permanence le levier de commande 43 en position de repos : la valve 58 ouverte retourne le fluide hydraulique au réservoir 59 et n'alimente pas le vérin 60. Le déplacement du levier 43 ferme plus ou moins la valve 58 et met sous pression le circuit et la chambre 351 jusqu'à obtention de la pression maximale qui est fixée à la pression donnant un effort inférieur à celui occasionnant l'éclatement de la meule. L'annulation de l'action sur le levier fait tomber la pression (par décharge dans le réservoir) et remonter automatiquement le bras de la meuleuse en position haute maximale.

La vitesse de descente a une valeur maximale réglée par l'action sur le régulateur de débit 57, les variations de positionnement du levier 43 permettent d'obtenir des vitesses allant de zéro à cette valeur maximale.

La fonction sécurité est assurée par le même circuit et les mêmes organes de la manière ci-après décrite.

Le blocage du bras en position, après descente par la commande sensible, est obtenu par la mise hors tension manuelle du distributeur 55. Le bras est alors immobilisé en position par fermeture des valves 53 et 54. En cas d'effort trop important sur la meule, proche de la limite d'éclatement de la meule, le bras a la possibilité de remonter par le vérin 36. Le limiteur de pression 64 maintient, dans la chambre 361 du côté de la tige du piston, une pression constante correspondant à l'effort maximal admissible. Dès que le bras remonte, il faut le soulager pour ne pas ajouter le poids du bras à l'effort de coupe ; le limiteur de pression 61 maintient dans la chambre 362, côté fond, une pression constante. Le rapport de section entre le fond du vérin correspondant à la chambre 362 et la tige correspondant à la chambre 361 a été pris égal à 2, les pressions sont réglées de façon que la pression au limiteur 50 soit égale à la pression au limiteur 61 et que la pression au régulateur 64 soit égale à 2 fois la pression au limiteur 61 augmentée de la pression correspondant à l'effort maximum de coupe qui est réglé par l'action sur le régulateur de pression 56.

La vitesse de redescente du bras est contrôlée par le régulateur de débit 62.

La marche du bras de meuleuse avec blocage en position ou non blocage est faite par un commutateur à deux positions placé sur le pupitre de commande (non représenté) en série avec le pressostat 63.

D'autres organes permettant le fonctionnement de la meuleuse sont prévus sur le pupitre et sont disposés sur le pupitre de manière que l'opérateur commande à distance :
— par sa main gauche : les mouvements de la table (va-et-vient avant et arrière, déplacement latéral et composition de ces deux mouvements),
— par sa main droite : le mouvement de relevage et d'abaissement de la meule.

La fonction de blocage obtenue par désexcitation du distributeur 55 est particulièrement intéressante car la majorité du meulage se fait sur des faces planes. La qualité du travail est supérieure à celle que l'on peut obtenir avec des machines pendulaires.

Le dispositif de retour d'effort donne de bons résultats dans les mouvements d'approche de la meule sur la pièce car le fonctionnement est souple et précis et il permet d'effectuer facilement des meulages difficiles et délicats, comme par exemple le meulage de faces convexes ou concaves, la meule suit le profil de la pièce pour une position donnée du levier de commande qui correspond à un effort de coupe constant.

## Revendications

1. Machine pour le meulage de produits de dureté élevée comportant un bras (1) portant une meule (4) à une de ses extrémités (2) et coopérant à son autre extrémité (6) avec un axe (7) fixé sur un support (8) permettant son déplacement dans un plan vertical, des moyens de déplacement (10) du bras disposés entre le bras (1) et le support (8) pour assurer ledit déplacement, un socle (12) supportant la table (13) sur laquelle est maintenue la pièce à usiner (11), caractérisée en ce que la table (13), portée par des patins hydrostatiques (15) alimentés en fluide de coupe, se déplace sur le socle (12) sous l'action de moyens de déplacement bidirectionnels (29, 32) prévus sur le socle, et en ce que les moyens de déplacement (10) du bras comportent au moins un vérin (35) à double effet constitué d'un corps séparé en deux chambres (351, 352) par un piston (37), ledit corps étant muni à chaque extrémité d'une entrée de fluide (39, 40), un premier circuit hydraulique à pression constante alimentant la chambre (352) produisant le levage du bras, un deuxième circuit hydraulique à pression supérieure à celle du premier circuit hydraulique alimentant l'autre chambre (351), une valve (53, 54) pilotée hydrauliquement disposée en amont de chacune des entrées de fluide, un distributeur (55) pour le pilotage desdites valves, des moyens de commande du distributeur et des valves, un dispositif hydraulique à retour d'effort (43, 58, 60) placé en amont de la valve (53) pilotée montée sur le deuxième circuit hydraulique et qui répercute sur le levier (43) les efforts subis par la meule lors de l'usinage de la pièce.

2. Machine selon la revendication 1, caractérisée en ce que les moyens de déplacement du bras comportent un deuxième vérin à double effet (36), le corps du deuxième vérin étant disposé dans le prolongement de celui du premier vérin (35), les tiges des pistons (36, 37) coopérant avec le bras (1) et le support (8), ledit corps étant muni à chaque extrémité d'une entrée de fluide (41, 42), un troisième circuit hydraulique alimentant la chambre (361) produisant le relevage du bras à une pression correspondant à l'effort maximal admissible sur la meule, un quatrième circuit hydraulique à une pression inférieure à celle du troisième circuit et au moins susceptible de compenser le poids du bras alimentant l'autre chambre (362), un dispositif régulateur de débit (62) disposé dans ledit quatrième circuit en amont de l'entrée de la chambre (362).

3. Machine selon la revendication 1 ou 2, caractérisée en ce que le dispositif hydraulique à retour d'effort est constitué d'un vérin à simple effet (60) et d'une valve (58) montée en parallèle, d'un levier (43) solidaire de la tige du piston de vérin et du clapet de valve.

4. Machine selon l'une quelconque des revendications précédentes, caractérisée en ce que les patins hydrostatiques (15) comportent une chambre de pression (24) remplie d'une substance visqueuse, ladite chambre étant formée par une membrane (20) fixée entre le chapeau (21) et l'élément de patin (19).

5. Machine selon l'une quelconque des revendications précédentes, caractérisée en ce que le support de bras (8) et le socle (12) sont formés au moins en partie de blocs de béton.

6. Machine selon l'une quelconque des revendications précédentes, caractérisée en ce que les moyens de déplacement bidirectionnels de la table sont au moins constitués de deux vérins : un vérin de déplacement transversal (29) par rapport au plan de la meule et un vérin de déplacement latéral (32), ledit vérin de déplacement latéral étant solidaire directement ou indirectement de la partie mobile du vérin de déplacement transversal.

## Claims

1. A machine for grinding products of great hardness, including an arm (1) carrying a grindstone (4) at one end (2) of it and cooperating at its other end (6) with a shaft (7) fixed to a support (8) enabling its movement in a vertical plane, means of movement (10) of the arm arranged between the arm (1) and the support (8) in order to provide the said movement, a bedplate (12) supporting the table (13) upon which is held the workpiece (11) which is to be machined ; characterized in that the table (13) carried by hydrostatic skids (15) fed with cutting-fluid, moves over the bedplate (12) under the action of biodirectional means of movement (29, 32) provided on the bedplate, and in that the means of movement (10) of the arm include at least one double-acting jack (35) consisting of a body separated into two chambers (351, 352) by a piston (37), the said body being equipped at each end with a fluid inlet (39, 40), a first constant-pressure hydraulic circuit which feeds the chamber (352) producing raising of the arm, a second hydraulic circuit of pressure higher than that of the first hydraulic circuit feeding the other chamber (351), a hydraulically piloted valve (53, 54) arranged upstream of each of the fluid inlets, a regulator (55) for piloting the said valves, means of control of the regulator and of the valves, a hydraulic device having force feedback (43, 58, 60) located upstream of the piloted valve (53) mounted in the second hydraulic circuit and reflecting against the lever (43) the forces sustained by the grindstone during the machining of the workpiece.

2. A machine as in Claim 1, characterized in that the means of movement of the arm include a second double-acting jack (36), the body of the second jack being arranged in prolongation of that of the first jack (35), the rods of the pistons (36, 37) cooperating with the arm (1) and the support (8), the said body being equipped at each end with a fluid inlet (41, 42), a third hydraulic circuit which feeds the chamber (361) producing raising of the arm at a pressure corresponding with the maximum admissible force against the grindstone, a fourth hydraulic circuit of pressure lower than that of the third circuit and at least capable of compensation the weight of the arm, feeding the other chamber (362), and a flow regulator device (62) arranged in the said fourth circuit upstream of the inlet to the chamber (362).

3. A machine as in Claim 1 or 2, characterized in that the said hydraulic device having force feedback consists of a single-acting jack (60) and a valve (58) mounted in parallel, and a lever (43) integral with the jack piston-rod and the valve flap.

4. A machine as in any one of the preceding Claims, characterized in that the hydrostatic skids (15) include a pressure chamber (24) filled with a viscous substance, the said chamber being formed by a diaphragm (20) fixed between the head (21) and the skid member (19).

5. A machine as in any one of the preceding Claims, characterized in that the support (8) for the arm and the bedplate (12) are formed at least partially of concrete blocks.

6. A machine as in any one of the preceding Claims, characterized in that the bidirectional means of movement of the table consist of at least two jacks ; a jack (29) for transverse movement with respect to the plane of the grindstone and a jack (32) for lateral movement, the said jack for lateral movement being united directly or indirectly as one with the movable portion of the jack for transverse movement.

## Ansprüche

1. Schleifmaschine für Produkte hoher Härte mit einem Arm (1), der an seinem einen Ende (2) einen Schleifstein (4) trägt und mit seinem anderen Ende (6) an einer Achse (7) befestigt ist, die von einem Ständer (8) getragen ist und eine Verschiebung des Armes in einer vertikalen Ebene gestattet, mit Verschiebemittel (10) für den Arm, die zwischen dem Arm (1) und dem Ständer (8) für die Erzeugung der genannten Bewegung angeordnet sind und mit einem Sockel (12), der einen Tisch (13) trägt, auf dem das zu bearbeitende Teil (11) gehalten ist, dadurch gekennzeichnet, daß der von hydrostatischen Gleitfüßen (15) getragene Tisch (13), die mit Schneidflüssigkeit gespeist werden, auf dem Sockel (12) durch in zwei Richtungen wirkende Verschiebemittel (29, 32) verschiebbar ist, die auf dem Sockel angeordnet sind, daß die Verschiebemittel (10) des Armes (1) wenigstens einen doppelt wirkenden Hydraulikzylinder (35) aufweisen, der aus einem durch einen Kolben (37) in zwei Kammern (351, 352) unterteilten Zylinder besteht, daß der Zylinder an jedem Ende mit einem Hydraulikanschluß (39, 40) versehen ist, daß ein erster Hydraulikkreis mit konstantem Druck dem Raum (352) speist und so das Anheben des Armes (1) bewirkt, daß ein zweiter Hydraulikkreis mit einem höheren Druck als der des ersten Hydraulikkreises den anderen Raum (351) speist, daß ein hydraulisch gesteuertes Ventil (53, 54) in Strömungsrichtung gesehen vor jedem der hydraulischen Anschlüsse eingeschaltet ist, daß ein Verteiler (55) für die Steuerung der genannten Ventile, Mittel für die Steuerung des Verteilers und der Ventile, eine hydraulische Einrichtung für die Rückbeanspruchung (43, 58, 60) in Strömungsrichtung gesehen vor dem gesteuerten Ventil (53) angeordnet sind, das in dem zweiten hydraulischen Kreis angeordnet ist und das auf den Hebel (43) die Kräfte zurückwirken läßt, die auf den Schleifstein (4) während der Bearbeitung des Stückes (11) einwirken.

2. Schleifmaschine nach Anspruch 1, dadurch gekennzeichnet, daß die Verschiebemittel für den Arm (1) einen zweiten doppelt wirkenden Hydraulikzylinder (36) aufweisen, daß der Zylinder des zweiten Hydraulikzylinders in der Verlängerung des ersten Hydraulikzylinders (35) angeordnet ist, daß die Kolbenstangen (36, 37) mit dem Arm (1) und dem Ständer (8) zusammenwirken, daß der Zylinder an jedem seiner Enden mit einem Hydraulikanschluß (41, 42) versehen ist, daß ein dritter Hydraulikkreis die Kammer (361) speist und ein Anheben des Armes (1) mit einem Druck bewirkt, der der maximal für den Schleifstein zulässigen Beanspruchung entspricht, daß ein vierter Hydraulikkreis mit einem Druck unterhalb desjenigen des dritten Hydraulikkreises vorgesehen ist, der zumindest dafür geeignet ist, das Gewicht des Armes auszugleichen, und der den anderen Raum (362) speist und daß ein Strömungsregler (62) in dem vierten Hydraulikkreis in Strömungsrichtung gesehen vor dem Eintritt in den Raum (362) angeordnet ist.

3. Schleifmaschine nach Anspruch 1 oder 2, dadurch gekennzeichnet, daß die hydraulische Vorrichtung für die Rückbeanspruchung aus einem einfach wirkenden hydraulischen Zylinder (60) und einem Ventil (58) besteht, die parallel geschaltet sind und aus einem Hebel (43), der fest mit der Kolbenstange des Hydraulikzylinders verbunden ist und aus einem Rückschlagventil.

4. Schleifmaschine nach einem der Ansprüche 1 bis 3, dadurch gekennzeichnet, daß die hydrostatischen Gleitfüße (15) einen Druckraum (24) aufweisen, der mit einer viskosen Substanz gefüllt ist, daß der Druckraum durch eine Menbrane (20) begrenzt ist, die zwischen dem Deckel (21) und dem Gleitfußelement (19) angeordnet ist.

5. Schleifmaschine nach einem der Ansprüche 1 bis 4, dadurch gekennzeichnet, daß der Ständer (8) des Armes und der Sockel (12) zumindest teilweise aus einem Betonblock bestehen.

6. Schleifmaschine nach einem der Ansprüche 1 bis 5, dadurch gekennzeichnet, daß die Mittel für die Verschiebung des Tisches in zwei Richtungen wenigstens aus zwei Hydraulikzylindern bestehen, daß ein Hydraulikzylinder eine transversale Verschiebung (29) im Vergleich zur Ebene des Schliefsteines und ein Hydraulikzylinder eine seitliche Verschiebung (32) ausführt und daß der Hydraulikzylinder für die seitliche Verschiebung direkt oder indirekt fest mit dem beweglichen Teil des transversalen Verschiebezylinders verbunden ist.

FIG.:1

FIG.:2

FIG.:3

2/2

0 003 197